# EUROPEAN PATENT SPECIFICATION

(11) **EP 0 266 155 B1**
(45) Date of publication and mention of the grant of the patent: **14.07.1993**
(21) Application number: 87309434.6
(22) Date of filing: 26.10.1987
(51) Int. Cl.: B01L 3/02, G01N 35/06

(54) **Multiple pipette sampler**
Probeentnahmevorrichtung mit Mehrkanalpipette
Dispositif de prélèvement d'échantillons à pipette multiple

(30) Priority: 24.10.1986 US 923117
(43) Date of publication of application: 04.05.1988
(73) Proprietor: Hanaway, Richard W., Roseville California 95747 (US); Hrudicka, James, Las Vegas Nevada 89124 (US)
(72) Inventor: Hanaway, Richard W., Roseville California 95747 (US); Hrudicka, James, Las Vegas Nevada 89124 (US)
(74) Representative: Smith, Philip Antony

(56) References cited:
- EP-A- 0 215 536
- US-A- 4 461 328
- US-A- 4 511 534
- US-A- 4 532 805
- RESEARCH DISCLOSURE, no. 202, February 1981, pages 79-84, Havant, Hampshire, GB, ref. 20218; "Procédé et dispositif pour le dosage de volumes liquides"

## Description

The present invention relates to an improved multiple pipette sampler system and related apparatus.

Pipettes of various configurations for withdrawing measured liquid samples from one container and transferring them to a second container have long been in use and are recognized as prior art. Typically, these pipettes require time-consuming care in achieving accurate measurement, and in their cleaning or sterilization between respective uses. Inaccuracies in measurements stem from lack of positive control of the shape and position of the liquid at the top and tip of the pipette at the time of filling, and also from variations in the amount of liquid left in the pipette tip upon expelling. Attempts to control these inaccuracies have in the past taken the form of costly manufacturing methods and use of additional parts to control the filled liquid position, as well as the use of elaborate apparatuses to encourage uniform dispensing.

Advances in microbiological, immunological, and other statistical research methods have made individual sampling impractical in terms of time and cost. The requirement for large numbers of samplings of contaminating liquids has created a need for low cost, disposable, multiple pipette samples. The prior art reveals a number of devices which represent attempts to solve the above-identified problems, and several multiple sample pipette assemblies are also in existence. Some of these devices are shown in U.S.-A-3,261,208, 3,568,735, 4,158,035, 4,461,328 and 4,468,974. A review of these patents will reveal that the attempts to provide accurate, multiple samples involve increased precision, materials, or numbers of parts -- all of which add to the manufacuturing cost and complexities. As such, it can be appreciated that the prior art attempts to control the uniformity of operation have resulted in awkward and time-consuming procedures and hardware.

As such, it appears that there is a continuing need for a multiple pipette sampler system which provides for a fast, convenient transfer of multiple liquid samples in repetitive situations wherein the construction thereof permits accurate sampling and minimum manufacturing cost, preferably in a disposable unit.

In accordance with the present invention there is provided a multiple pipette sampler comprising a plurality of pipette cavities formed in a pipette sheet, a housing sealingly attached to the pipette sheet to form a manifold which is positioned above the pipette sheet and which is in fluid communication with each of the pipettes, and pressure-varying means attachable to the manifold to allow alternate evacuation and pressurization of the manifold, characterized in that the pipette cavities are thermoformed in a thin flat sheet to have capillary tips and a rim at the top of each cavity, the housing is also thermoformed and has a plurality of stiffening depressions in its top surface and the housing is attached to the pipette sheet to form a rigid monocoque structure which holds the pipette sheet in a single plane with the depressions joined to the pipette sheet.

Furthermore, in accordance with the present invention there is provided a process of using a multiple pipette as mentioned above comprising the steps of :
inserting said plurality of pipettes into a liquid retained within a filling tray while said manifold is in fluid communication with the atmosphere, thereby permitting capillary action to partially fill said pipettes with a uniform volume of said liquid;
decreasing the pressure in said manifold enough to draw said liquid upwards to a level above said rims of said pipettes, thereby effecting a complete wetting of interior portions of said pipettes, said liquid being retained at said level by the formation of stretched convexly shaped menisci;
increasing the air pressure in said manifold enough to allow said menisci to assume a concave shape, thereby retaining said pipettes in a completely liquid filled condition;
removing said plurality of pipettes from said filling tray and transferring said plurality of pipettes to receiving wells, said pipettes being placed below the level of liquid in said wells;
further increasing the air pressure in said manifold enough to dispense said liquid in pipettes into said receiving wells; and,
removing said plurality of pipettes from said receiving wells whereby surface tension removes all but small uniform volumes of said liquid from said pipette tips, said uniform volumes being substantially equal to those present immediately after insertion of the pipettes into said filling tray.

In a specific embodiment of the invention identical pipette cavities are formed in a thin 0.38 to 0.5mm (.015 to .020 inches) plastic sheet. A second thin plastic sheet is formed so that when joined to the first sheet, a manifold is created whereby equal pressure may be applied to each pipette cavity. At the same time the joining of the first and second sheets produces a rigid monocoque structure which holds the pipette cavities in a single plane.

In order to obtain uniform initial conditions, a preformed plastic filling tray is provided so that the level of the liquid sample is identical for each use. When placed in this filling tray, each pipette tip draws in an equal volume of liquid due to capillary action.

A quick release connection is provided in the plastic manifold, whereby a small actuating device is attached to the pipette assembly and is operable as a source of vacuum or pressure. When the actuating device is operated, i.e., when it is utilized to draw a vacuum on the manifold, liquid is drawn into the pipette cavities until they are overfilled to a point where the cavity walls are completely wetted and a convex, stretched meniscus is formed at the top of each cavity. Since the force required to produce this stretched meniscus is large compared to irregularities, such as the levelness of the pipette array or differences in the surface conditions of the plastic, these overfilled liquid volumes are nearly identical. When the actuator is released to a preset stop, identical concave meniscuses are formed in each cavity with equal volumes of liquid then being retained therein. The pipette cavities are formed in the shape of the upper one half of an hourglass which reduces the size of the tips to small capillary tubes upon which no liquid drops are formed when the pipettes are withdrawn from the liquid in the filling tray. Each pipette cavity now holds an equal volume of liquid sample.

The multiple pipette sampler comprising the invention is then transferred to receiving wells, the actuator is released, and the liquid samples are expelled. the pipette tips are placed so that they are below the liquid level in the receiving wells and, when they are withdrawn, capillary action removes all but a small, uniform volume of liquid from each pipette tip.

Since the actuating device is attached to the multiple pipette array during use, whereby it comprises a single unit in combination with the array, the complete device is fully mobile, and is operable to quickly and easily transfer liquid samples in a one-hand operation. After use, the contaminated pipette array and filling tray are discarded, while the actuator is retained for further use.

The invention will now be described in more detail with the aid of an example illustrated in the accompanying drawings, in which:-
Figure 1 is a top plan view of the pipettes formed in a sheet comprising a part of the present invention.
Figure 2 is a side elevation view of the pipette sheet structure.
Figure 3 is a top plan view of the housing forming a part of the present invention.
Figure 4 is a side elevation view of the housing.
Figure 5 is a cross-sectional view of the assembled pipette sheet and housing.
Figure 6 is a top plan view of the filling tray forming a part of the present invention.
Figure 7 is a cross-sectional view of the filling tray taken along the line 7-7 in Figure 6.
Figure 8 is a cross-sectional view of the actuator attachment utilizable in the combination of the present invention.
Figure 9 is a cross-sectional view of a pipette illustrating the same initially inserted into a liquid, whereby capillary action has been initiated to a partially filled the pipette.
Figure 10 is a cross-sectional view of the pipette showing the same filled with liquid after a use of the actuator attachment forming a part of the present invention.
Figure 11 is a cross-sectional view of a pipette illustrating its filled condition after the release of actuator vacuum.
Figure 12 is a cross-sectional view of the pipette after a dispensing of the fluid contained therein.

### DESCRIPTION OF THE PREFERRED EMBODIMENT

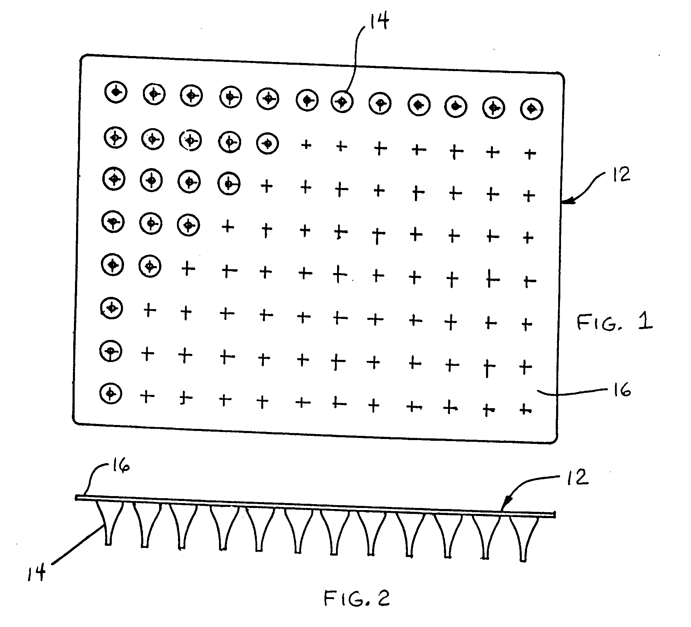

With reference now to the drawings, and in particular to Figures 1 through 12 thereof, a new and improved multiple pipette sampler embodying the principles and concepts of the present invention and generally designated by the reference numeral 10 will be described.

As described herein, the multiple pipette sampler device 10 is used to simultaneously rehydrate and innoculate a 96 well microtiter tray. Thus, the pipette sheet 12, as illustrated in Figures 1 and 2, is an array of 96 pipette cavities 14 depending downwardly from an integral flat sheet 16. A precision die is used to thermoform a 0.38 to 0.51 mm (.015 to .020 inch) polyvinylchloride (PVC) plastic sheet so that each cavity 14 is identical. The tip of each pipette cavity 14 is removed so that a liquid may be drawn into the cavity.

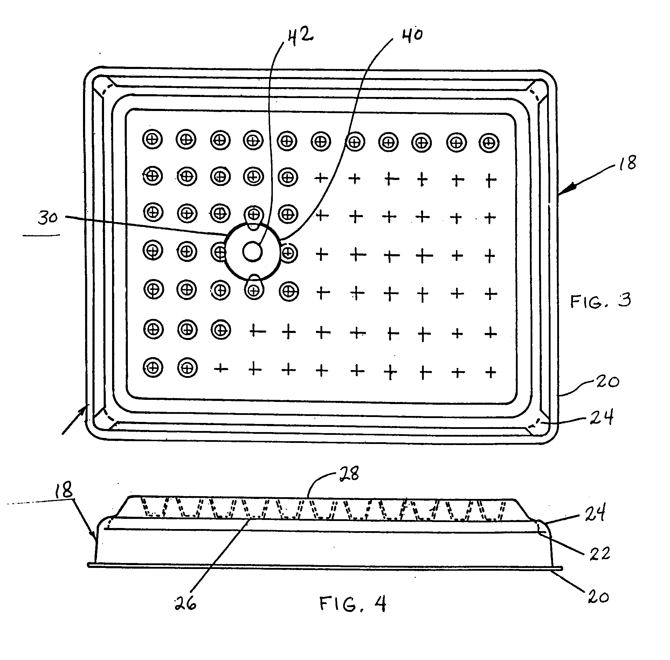

In a similar manner, the housing 18, as shown in Figures 3 and 4, is thermoformed in a second die from a 0.38 to 0.51 mm (.015 to .020 inch) polyvinylchloride plastic sheet. The concavely-shaped housing 18 includes a skirt portion 20 and an interiorly formed step 22. Vent passages 24 are formed at each corner of the housing 18, and a plurality of stiffening depressions 26 are thermoformed in a top surface 28 of the housing. As best illustrated in Figure 3, an actuator attachment 30, which will be subsequently described in greater detail, is also integrally formed or otherwise separately attached to the top surface 28 of the housing 18.

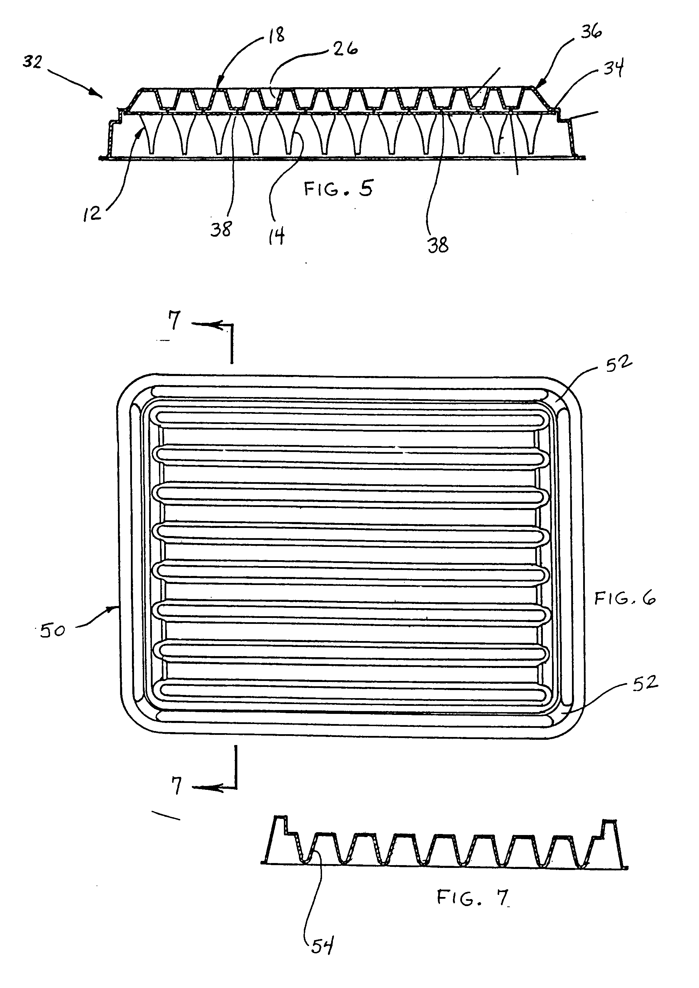

The pipette sheet 12 and the housing 18 are joined together, preferably by dielectric heat sealing, into a rigid structure 32 as shown in Figure 5. In this regard, the pipette sheet 12 and the housing 18 are sealed along a peripheral edge generally designated by the reference numeral 34. This sealing effectively forms a manifold 36, and each of the stiffening depressions 26 are heat welded at bottom sections 38 thereof to the pipette sheet 12, thus to form a beam structure clearly illustrated in the cross-sectional view of Figure 5. As such, each pipette cavity 14 may have equal vacuum or pressure applied to it, and each such cavity is held in a rigid plane during such pressure variations.

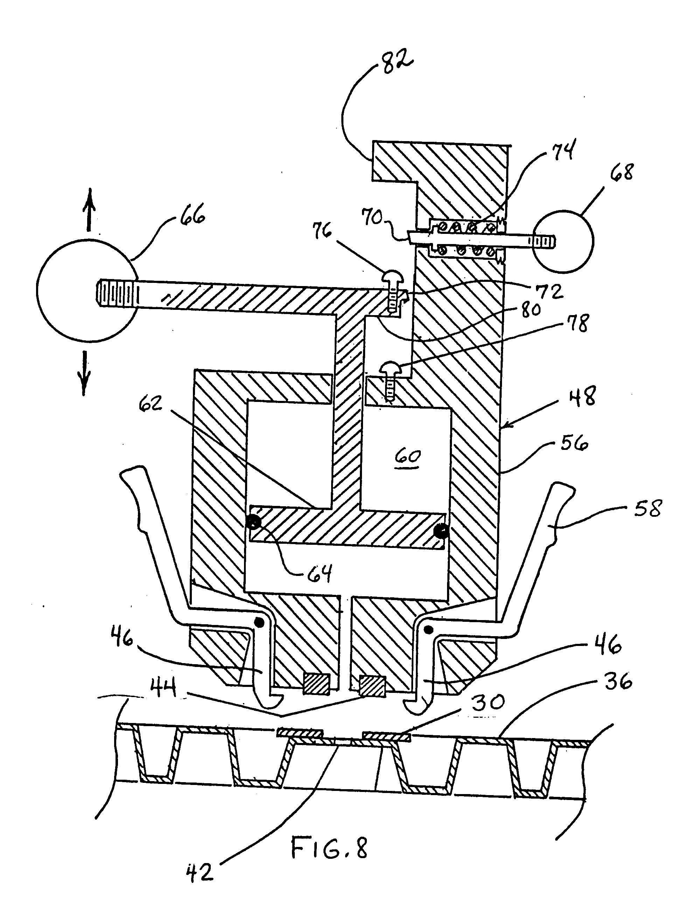

With further reference to the aforementioned actuator attachment 30, as best illustrated in Figures 3 and 8, it can be seen that the same consists of a 0.76 mm (.030 inch) thick plastic washer which is sealed or otherwise affixed to the housing 18, preferably in a preformed cavity 40. A through-extending aperture or passage 42 is provided into the manifold 36 of the assembly 10. The washer 30 serves as a sealing surface for a gasket 44 and as purchase for grasping hooks 46 which join an actuator device 48 to the pipetting device 32, thus to form a single portable unit.

A filling tray 50, as shown in Figures 6 and 7, is thermoformed in a die from a 0.38 to 0.51 mm (.015 to .020 inch) plastic sheet. The integral construction of the tray 50 includes vents 52 at the four corners thereof. Additionally, a plurality of liquid holding slots 54 are formed in the tray 50, with these slots being designed to retain a liquid to be drawn into the pipette cavities 14 in a manner yet to be described.

With further reference to the actuator device 48, reference is again made to Figure 8 of the drawings for a complete description thereof. In this respect, it can be seen that the actuator device 48 includes a housing 56, with the aforementioned grasping hooks 46 being pivotally mounted within the housing. The hooks 46 are provided with upwardly extending, manually movable handles 58, thus to provide for their rapid attachment to and release from the actuator attachment 30. A pressure chamber or cylinder 60 is formed within the housing 56 and includes a reciprocably movable piston 62 mounted therein. The piston 62 is provided with a sealing gasket 64 so as to prevent airflow around the peripheral edges of the piston. A topmost portion of the piston 62 is attached to a manually operable handle 66 which thus facilitates the upward or downward movement of the piston within the chamber 60.

A manually operable, spring-biased filled position catch 68 is reciprocally mounted within the housing 56. The catch 68 includes an extended end portion 70 that includes a cammed surface which slides over an extended edge 72 of the handle 66. The extended edge 72 of the handle 66 is also cammed so that a slidable engagement between the edges 70, 72 is facilitated during an upward movement of the handle 66. After the edge 72 moves past the edge 70, the spring 74 moves the edge 70 beneath the edge 72, thus to maintain the piston 62 in its upwardly directed position.

The actuator device 48 further includes limit stops 76, 78. More specifically, the limit stop 76 comprises a threaded member which may be moved upwardly or downwardly within the handle 66 and is operable to limit the amount of upward movement of the handle relative to the housing 56. In effect, the limit stop 76 comprises an overfill limit stop inasmuch as it can be adjusted to a point where the pipette cavities 14 are precisely filled by an upward movement of the piston 62.

Similarly, the limit stop 78 comprises a threaded member which may be adjusted upwardly or downwardly relative to the housing 56, with this stop comprising a liquid expelling limit stop, whereby a precise dispensing of liquid from the cavities can be achieved by a downward movement of the piston 62 until an abutable relationship between the handle 66 and the limit stop 78 is experienced. The limit stop 78 is abutable with an extended handle portion 80, while the overfill limit stop is abutable with an extended housing portion 82.

### OPERATION

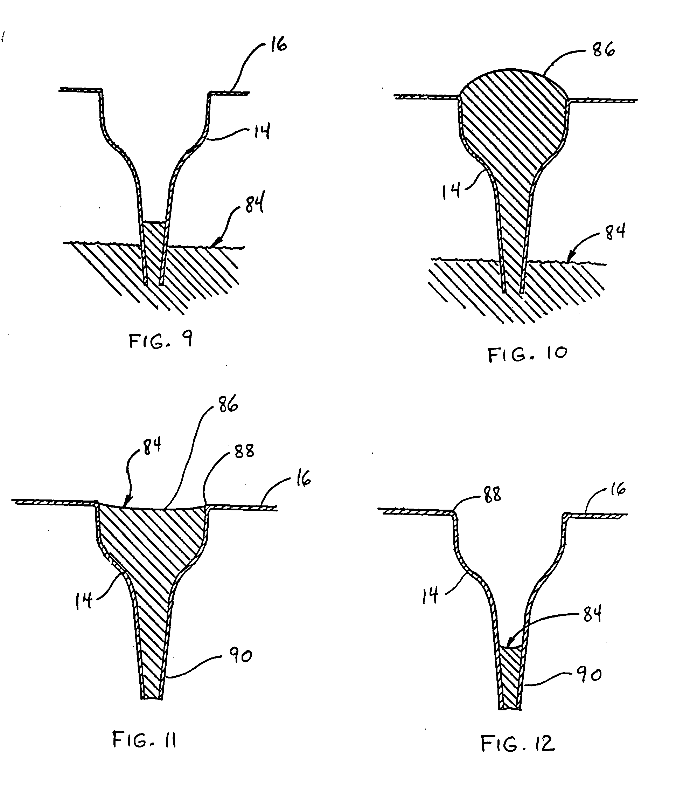

In operation, a premeasured volume of innoculating liquid 84, such as shown in Figures 9, 10, 11 and 12, is placed in the filling tray 50 illustrated in Figures 6 and 7. The pipetting device 32 is then lowered into the filling tray 50, and the pipette tips are filled to equal levels by capillary action as shown in Figure 9. The actuating device 48, as best illustrated in Figure 8, is then attached and sealed to the pipetting device 32 by means of the grasping hooks 46 being hooked over the edges of the washer 30. When the piston 62 is drawn upwardly within the housing 56, a vacuum is formed within the lower portion of the pressure chamber 60. As the piston 62 is drawn upwardly until the overflow limit stop 76 abuts with the extended housing edge 82, the innoculating liquid 84 is drawn into each pipette cavity 14 until the walls and rims 88 of all such cavities are completely wetted and a stretched meniscus 86 is formed at the top of each cavity as shown in Figure 10. Each rim 88 (Figs. 11 and 12) is surrounded by a film of hydrophobic plastic.

Since the vacuum required to form a meniscus 86 is relatively large, each meniscus serves to limit and equalize the liquid volumes held in the pipette cavities 14 at this overflow condition, despite small variations due to levelness of the tray 50, impurities, or the wetting of the plastic walls. A manual release of the piston handle 66 will allow the piston 62 to travel partially downwardly within the cylinder 60 until the extended edge 72 engaged the edge 70 forming a part of the filled position catch 68. The piston 62 is then locked in this position, while the partial downward movement of the piston 62 results in at least a partial release of vacuum within the manifold 36. As such, predetermined equal liquid volumes are retained in all of the pipette cavities 14, as best illustrated in Figure 11. At this point, each pipette cavity rim 88 is uniformly wetted, and the meniscus 86 again tends to equalize the liquid volumes.

The complete unit consisting of the actuating device 48 and the pipetting device 32 is then removed from the filling tray 50 and transferred to an unillustrated 96 well microtiter tray. The housing skirt 20 and the associated step 22, as best illustrated in Figure 4, position the pipette tips 90 in the receiving wells. The filled position catch 68 may then be manually pulled from the housing 56, thereby to effect a disengagement of the edges 70, 72 so as to release the piston 62 for further downward movement within the cylinder 60. The piston 62 then returns to its original position, and most of the innoculating liquid 84 is expelled from the pipette cavities 14. The pipette tips 90 have been positioned so that at this time, they are below the level of liquid 84 in the microtiter tray wells. The complete unit is then removed from the microtiter tray and surface tension draws the liquid volume in each tip 90 down to an equal level, as illustrated in Figure 12, thereby to ensure that equal liquid volumes have been delivered to the microtiter tray wells. In this regard, the liquid volumes in each tip 90 at the start and finish of the cycle are equal, i.e., the same amount of liquid is retained in the procedural steps represented by Figures 9 and 12. Accordingly, the pressure in the pipette cavities 14 is then at atmospheric at the completion of the cycle, and no single pipette tip 90 is fully emptied of the liquid 84.

The complete unit is then returned to the filling tray 50, the actuating device 38 is removed, and the contaminated pipetting deive 32 and the filling tray, as well as all the remaining innoculating liquid 84, are discarded.

## Claims

1. A multiple pipette sampler comprising a plurality of pipette cavities (14) formed in a pipette sheet (12), a housing (18) sealingly attached to the pipette sheet to form a manifold (36) which is positioned above the pipette sheet and which is in fluid communication with each of the pipettes, and pressure-varying means (48) attachable to the manifold to allow alternate evacuation and pressurization of the manifold, characterized in that the pipette cavities (14) are thermoformed in a thin flat sheet (16) to have capillary tips (90) and a rim (88) at the top of each cavity, the housing is also thermoformed and has a plurality of stiffening depressions (26) in its top surface, and the housing is attached to the pipette sheet to form a rigid monocoque structure (32) which holds the pipette sheet (12) in a single plane with the depressions (26) joined to the pipette sheet.

2. A sampler as claimed in claim 1 characterized in that each pipette cavity is shaped as the upper half of an hour-glass.

3. A sampler as claimed in claim 1 or 2 characterized in that the pipette sheet is a thermoplastic sheet of 0.38 to 0.51mm (0.015 to 0.020 inch) thickness before thermoforming.

4. A sampler as claimed in any of the preceding claims characterized in that a film of hydrophobic plastic surrounds the rim (88) of each of the pipette cavities (14).

5. A multiple pipette sampler as claimed in any of claims 1 to 4, wherein an attachment means (30) is formed in said manifold, said pressure varying means being attachable to said attachment means.

6. A multiple pipette sampler as claimed in any of claims 1 to 5, further including a filling tray (50), said plurality of pipettes being positionable within a liquid contained within said filling tray.

7. A multiple pipette sampler as claimed in claim 6, wherein said filling tray retains said pipette sheet at a selected uniform level during a filling of said plurality of pipettes.

8. A multiple pipette sampler as claimed in claim 6 or 7, wherein an integrally formed skirt (20) forming a part of said manifold prevents tips of said pipettes from coming into surface engagement with the filling tray.

9. A multiple pipette sampler as claimed in any of the preceding claims, wherein said pressure varying means comprises a manually movable piston (62) within a housing (56).

10. A multiple pipette sampler as claimed in claim 9, wherein said pressure varying means includes hook means (58) for effecting an attachment of said pressure varying means to said manifold.

11. A multiple pipette sampler as claimed in claim 10, wherein said hook means is manually operable.

12. A multiple pipette sampler as claimed in claim 9, 10 or 11, in which said pressure varying means includes an adjustable limit stop (76) to limit the upward movement of the piston and thereby effect a desired maximum filling of said pipettes in response to an upward movement of said piston.

13. A multiple pipette sampler as claimed in any of claims 9 to 12, in which the pressure-varying means includes an adjustable limit stop (78) to limit downward movement of said piston and thereby limit the amount of liquid expelled from the pipettes.

14. A multiple pipette sampler as claimed in any of claims 9 to 13, and further including catch means (70) for limiting downward movement of said piston from its uppermost position until the catch means is released, thereby facilitating an increase in pressure within said manifold.

15. A process of using a multiple pipette sampler as claimed in any of claims 1 to 14 comprising the steps of:
inserting said plurality of pipettes into a liquid retained within a filling tray while said manifold is in fluid communication with the atmosphere, thereby permitting capillary action to partially fill said pipettes with a uniform volume of said liquid;
decreasing the pressure in said manifold enough to draw said liquid upwards to a level above said rims of said pipettes, thereby effecting a complete wetting of interior portions of said pipettes, said liquid being retained at said level by the formation of stretched convexly shaped menisci;
increasing the air pressure in said manifold enough to allow said menisci to assume a concave shape, thereby retaining said pipettes in a completely liquid filled condition;
removing said plurality of pipettes from said filling tray and transferring said plurality of pipettes to receiving wells, said pipettes being placed below the level of liquid in said wells;
further increasing the air pressure in said manifold enough to dispense said liquid in pipettes into said receiving wells; and,
removing said plurality of pipettes from said receiving wells whereby surface tension removes all but small uniform volumes of said liquid from said pipette tips, said uniform volumes being substantially equal to those present immediately after insertion of the pipettes into said filling tray.

## Patentansprüche

1. Mehrpipetten-Probenentnahmevorrichtung, enthaltend eine Vielzahl Pipettenhohlräume (14), die in einem Pipettentablett (12) ausgebildet sind, ein Gehäuse (18), das an dem Pipettentablett unter Ausbildung eines Verteilers (36) dicht befestigt ist, der über dem Pipettentablett angeordnet ist und in Fluidverbindung mit jeder der Pipetten steht, und eine druckvariierende Vorrichtung (48), die am Verteiler anbringbar ist, um abwechselnd eine Evakuierung und Unterdrucksetzung des Verteilers zu gestatten,
**dadurch gekennzeichnet,**
daß die Pipettenhohlräume (14) in einer dünnen flachen Folie (16) durch Thermoverformen mit Kapillarspitzen (90) und einem Rand (88) an der Oberseite jedes Hohlraumes ausgebildet sind, das Gehäuse ebenfalls durch Thermoverformen entstanden ist und eine Vielzahl Versteifungsvertiefungen (26) in seiner Oberseitenoberfläche aufweist und das Gehäuse an dem Pipettentablett unter Ausbildung eines starren selbsttragenden Schalenaufbaus (32) angebracht ist, der das Pipettentablett (12) in einer einzigen Ebene hält, wobei die Vertiefungen (26) mit dem Pipettentablett verbunden sind.

2. Probenentnahmevorrichtung nach Anspruch 1,
**dadurch gekennzeichnet,**
daß jeder Pipettenhohlraum wie die obere Hälfte einer Sanduhr geformt ist.

3. Probenentnahmevorrichtung nach Anspruch 1 oder 2,
**dadurch gekennzeichnet,**
daß das Pipettentablett vor der Thermoverformung eine thermoplastische Folie mit einer Dicke von 0,38 bis 0,51 mm (0,015 bis 0,020 Zoll) ist.

4. Probenentnahmevorrichtung nach irgendeinem der vorstehenden Ansprüche,
**dadurch gekennzeichnet,**
daß ein Film aus hydrophobem Kunststoff den Rand (88) jeder der Pipettenhohlräume (14) ungibt.

5. Mehrpipetten-Probenentnahmevorrichtung nach irgendeinem der Ansprüche 1 bis 4, bei der eine Anbringungsvorrichtung (30) in Verteiler ausgebildet ist, wobei die druckvariierende Vorrichtung an dieser Anbringungsvorrichtung anbringbar ist.

6. Mehrpipetten-Probenentnahmevorrichtung nach irgendeinem der Ansprüche 1 bis 5, ferner enthaltend eine Füllschale (50), wobei die Vielzahl Pipetten innerhalb einer in der Füllschale enthaltenen Flüssigkeit positionierbar ist.

7. Mehrpipetten-Probenentnahmevorrichtung nach Anspruch 6, bei der die Füllschale das Pipettentablett während eines Füllvorganges der Vielzahl Pipetten auf einen ausgewählten gleichbleibenden Niveau hält.

8. Mehrpipetten-Probenentnahmevorrichtung nach Anspruch 6 oder 7, bei der ein angeformter Rand (20), der ein Teil des Verteilers ist, die Spitzen der Pipetten daran hindert, daß sie in Oberflächenberührung mit der Füllschale kommen.

9. Mehrpipetten-Entnahmevorrichtung nach irgendeinem der vorstehenden Ansprüche, bei der die druckvariierende Vorrichtung einen manuell verschiebbaren Kolben (62) innerhalb eines Gehäuses (56) aufweist.

10. Mehrpipetten-Probenentnahmevorrichtung nach Anspruch 9, bei der die druckvariierende Vorrichtung eine hakenartige Vorrichtung (58) zum Bewirken einer Anbringung der druckvariierenden Vorrichtung an Verteiler aufweist.

11. Mehrpipetten-Probenentnahmevorrichtung nach Anspruch 10, bei der die hakenartige Vorrichtung manuell betätigbar ist.

12. Mehrpipetten-Probenentnahmevorrichtung nach Anspruch 9, 10 oder 11, bei der die druckvariierende Vorrichtung einen einstellbaren Begrenzungsanschlag (76) aufweist, der die Aufwärtsbewegung des Kolbens begrenzt und dadurch eine gewünschte Maximalfüllung der Pipetten aufgrund einer Aufwärtsbewegung des Kolbens bewirkt.

13. Mehrpipetten-Probenentnahmevorrichtung nach irgendeinem der Ansprüche 9 bis 12, bei der die druckvariierende Vorrichtung einen einstellbaren Begrenzungsanschlag (78) aufweist, der die Abwärtsbewegung des Kolbens begrenzt und dadurch die aus den Pipetten ausgestoßene Flüssigkeitsmenge begrenzt.

14. Mehrpipetten-Probenentnahmevorrichtung nach irgendeinem der Ansprüche 9 bis 13, ferner enthaltend eine Klinkenvorrichtung (70) zum Begrenzen der Abwärtsbewegung des Kolbens von seiner obersten Stellung aus, bis die Klinkenvorrichtung freigegeben wird, um dadurch eine Erhöhung des Drucks innerhalb des Verteilers zu erleichtern.

15. Verfahren zur Verwendung einer Mehrpipetten-Probenentnahmevorrichtung nach irgendeinem der Ansprüche 1 bis 14, enthaltend die Schritte:
Einsetzen der Vielzahl Pipetten in eine in einer Füllschale enthaltenen Flüssigkeit, während der Verteiler in Fluidkommunikation mit der Atmosphäre steht, wodurch eine Kapillartwirkung zum teilweisen Füllen der Pipetten mit einem gleichen Volumen der Flüssigkeit zugelassen wird;
Erniedrigen des Drucks im Verteiler in einem genügenden Ausmaß, um die Flüssigkeit nach oben auf ein Niveau oberhalb der Ränder der Pipetten zu ziehen, wodurch eine vollständige Benetzung innerer Abschnitte der Pipette bewrikt wird, wobei die Flüssigkeit durch die Ausbildung von ausgedehnten konvex geformten Menisken auf diesem Niveau gehalten wird;
Erhöhen des Luftdrucks in dem Verteiler in einem genügenden Ausmaß, um es den Menisken zu gestatten, eine konkave Gestalt anzunehmen, wodurch die Pipetten in einem vollständig flüssigkeitsgefüllten Zustand gehalten werden;
Entfernen der Vielzahl Pipetten aus der Füllschale und Überführen der Vielzahl Pipetten zu Aufnahmebehältern, wobei die Pipetten unter dem Niveau von Flüssigkeit in den Behältern plaziert werden;
weiteres Erhöhen des Luftdrucks in dem Verteiler in einem genügenden Ausmaß, um die Flüssigkeit in den Pipetten in die Aufnahmebehälter abzugeben; und
Entfernen der Vielzahl Pipetten aus den Aufnahmebehältern, wobei durch Oberflächenspannung die gesamte Flüssigkeit bis auf kleine gleichbleibende Volumen von Flüssigkeit aus den Pipettenspitzen entfernt wird, welche gleichbleibenden Volumen in wesentlichen gleich denjenigen sind, die unmittelbar nach dem Einsetzen der Pipetten in die Füllschale vorhanden sind.

## Revendications

1. Dispositif de prélèvement d'échantillons à pipettes multiples comprenant une pluralité de cavités (14) de pipettes formées dans une plaque (12) de pipettes, un boîtier (18) fixé de manière étanche à la plaque de pipette pour former une tubulure (36) qui se trouve au-dessus de la plaque de pipette et qui est en communication fluidique avec chacune des pipettes, et un moyen (48) de réglage de pression qui peut être fixé à la tubulure pour permettre l'évacuation et la pressurisation alternées de la tubulure, caractérisé en ce que les cavités (14) de pipettes sont thermoformées dans une mince plaque (16) plane avec des pointes capillaires (90) et un rebord (88) en haut de chaque cavité, le boîtier est également thermoformé et comporte des creux de raidissage (26) dans sa surface supérieure, et le boîtier est fixé à la plaque de pipettes pour constituer une structure rigide monocoque (32) qui maintient la plaque (12) de pipette dans le même plan que les creux (26) en contact avec la plaque de pipette.

2. Dispositif de prélèvement d'échantillons selon la revendication 1, caractérisé en ce que chaque cavité de pipette a une forme identique à celle de la moitié supérieure d'un sablier.

3. Dispositif de prélèvement d'échantillons selon la revendication 1 ou 2, caractérisé en ce que la plaque de pipettes est une plaque thermoplastique de 0,38 à 0,51 mm (0.015 à 0.020") d'épaisseur avant thermoformage.

4. Dispositif de prélèvement d'échantillons selon l'une quelconque des revendications précédentes, caractérisé en ce qu'un film de matière plastique hydrophobe entoure le rebord (88) de chacune des cavités (14) de pipettes.

5. Dispositif de prélèvement d'échantillons à pipettes multiples selon l'une quelconque des revendications 1 à 4, dans lequel un moyen de fixation (30) est formé dans ladite tubulure, ledit moyen de réglage de pression pouvant être attaché audit moyen de fixation.

6. Dispositif de prélèvement d'échantillons à pipettes multiples selon l'une quelconque des revendications 1 à 5, comprenant en outre un plateau de remplissage (50) ladite pluralité de pipettes pouvant être positionnées à l'intérieur d'un liquide contenu dans ledit plateau de remplissage.

7. Dispositif de prélèvement d'échantillons à pipettes multiples selon la revendication 6, dans lequel ledit plateau de remplissage maintient ladite plaque de pipettes à un niveau uniforme sélectionné pendant le remplissage de ladite pluralité de pipettes.

8. Dispositif de prélèvement d'échantillons à pipettes multiples selon la revendication 6 ou 7, dans lequel une chemise formée à même (20) faisant partie de ladite tubulure empêche aux pointes desdites pipettes de venir en engagement superficiel avec le plateau de remplissage.

9. Dispositif de prélèvement d'échantillons à pipettes multiples selon l'une quelconque des revendications précédentes, dans lequel ledit moyen de réglage de pression comprend un piston (62) mobile manuellement placé à l'intérieur d'un boîtier (56).

10. Dispositif de prélèvement d'échantillons à pipettes multiples selon la revendication 9, dans lequel ledit moyen de réglage de pression comprend des moyens à crochets (58) pour assurer la fixation dudit moyen de réglage de pression avec ladite tubulure.

11. Dispositif de prélèvement d'échantillons à pipettes multiples selon la revendication 10, dans lequel lesdits moyens à crochets sont manoeuvrables à la main.

12. Dispositif de prélèvement d'échantillons à pipettes multiples selon l'une des revendications 9, 10 ou 11, dans lequel ledit moyen de réglage de pression comprend une butée limite réglable (76) qui limite le mouvement ascendant du piston et assure ainsi un remplissage maximal souhaité desdites pipettes en réponse à un mouvement ascendant dudit piston.

13. Dispositif de prélèvement d'échantillons à pipettes multiples selon l'une des revendications 9 à 12, dans lequel le moyen de réglage de pression comprend une butée limite réglable (78) pour limiter le mouvement descendant dudit piston et limiter de cette façon la quantité de liquide expulsée des pipettes.

14. Dispositif de prélèvement d'échantillons à pipettes multiples selon l'une quelconque des revendications 9 à 13, comprenant en outre un moyen de loquet (70) pour limiter le mouvement descendant dudit piston à partir de sa position la plus haute jusqu'à ce que le moyen de loquet soit lâché, en facilitant ainsi une augmentation de pression à l'intérieur de ladite tubulure.

15. Procédé d'utilisation d'un dispositif de prélèvement d'échantillons à pipettes multiples selon l'une quelconque des revendications 1 à 14, comprenant les étapes suivantes :
- introduction de ladite pluralité de pipettes dans un liquide contenu à l'intérieur d'un plateau de remplissage pendant que ladite tubulure est en communication fluidique avec l'atmosphère, de façon à remplir partiellement par capillarité lesdites pipettes avec un volume uniforme dudit liquide ;
- diminution de la pression dans ladite tubulure suffisamment pour faire monter ledit liquide jusqu'à un niveau dépassant lesdits rebords desdites pipettes, afin d'effectuer ainsi un mouillage complet des parties intérieures desdites pipettes, ledit liquide étant maintenu audit niveau par la formation de ménisques tendus de forme convexe ;
- augmentation de la pression d'air à l'intérieur de ladite tubulure suffisamment pour permettre audit ménisque de prendre une forme concave, afin de maintenir ainsi les-dites pipettes à l'état complètement rempli de liquide ;
- sortie de ladite pluralité de pipettes dudit plateau de remplissage et transfert de ladite pluralité de pipettes dans des cuvettes de réception, lesdites pipettes étant placées au-dessous du niveau du liquide dans lesdites cuvettes ;
- nouvelle augmentation de la pression d'air dans ladite tubulure suffisante pour faire passer ledit liquide se trouvant dans les pipettes à l'intérieur desdites cuvettes de réception ; et
- sortie de ladite pluralité de pipettes desdites cuvettes de remplissage de façon que la tension superficielle élimine la totalité sauf de petites volumes uniformes dudit liquide desdites pointes des pipettes, lesdits volumes uniformes étant sensiblement égaux à ceux qui existent immédiatement après l'introduction des pipettes dans ledit plateau de remplissage.
